# EUROPEAN PATENT APPLICATION

(11) **EP 3 968 254 A1**
(43) Date of publication of application: **16.03.2022**
(21) Application number: 19928029.8
(22) Date of filing: 07.05.2019
(51) Int. Cl.: G06Q 30/00

(54) **METHOD FOR TRACKING PRODUCT HISTORY**

(71) Applicant: Lin, Hui, Taipei City, Taiwan 11493 (TW)
(72) Inventor: Lin, Hui, Taipei City, Taiwan 11493 (TW)
(74) Representative: De Pablos Riba, Juan Ramon
(86) International application number: PCT/CN2019/085880
(87) International publication number: WO 2020/223905

(57) **Abstract**

A method for tracking product history combines application identifiers (AI) created in a format agreed upon by different manufacturers and employs block chain technology for linking information in series. The invention enables a history network of a specific product to be developed in vertical and horizontal directions, and allows consumers to submit queries online, such that information associated with the product and generated in processes such as manufacturing, warehousing and distribution, is queryable and tamper-proof. With the expansion of the network, additional paths of the product, such as reprocessing and processing paths, can be further tracked, thereby ensuring the reliability of product quality.

## Description

### FIELD OF THE INVENTION

The present invention is related to a business method, in particular to a method for tracking product history.

### BACKGROUND OF THE INVENTION

In current business society, many merchandises are manufactured and systems for sale of these merchandise are complicated and huge. The divisions of works and cooperation of labors are so complex so that it cannot assure that qualities of final products which sell to the consumers are steady, safe and reliable. Because it is often that the products are not manufactured completely, even some similar products are mixed with real ones. Events, such as changes of labels or barcodes, frequently occur (these events are not confined to foods since foods are directly relative to health of human and life, in this specification, foods are used as examples for descriptions of the invention). One example is to use oil fishes to camouflage as Patagonian toothfishes. These actions will affect business reliability and safety, even affecting health of consumers.

Although current historical data of the products about production processes and sale processes are adapted for showing the processes in manufacturing and sale so as to acquire reliability of consumers, while currently, the historical data of the products are not unified and thus many different specifications are adapted and moreover, they are limited by areas. Furthermore, many authentication mechanisms are concentrated on the processes of manufacturing, managements of the plants, packaging of the products, etc., while information on the upstream supplies are not sufficient. Besides, for importers, based on the managements of resources and market mechanism, pollution of foods is a very important problem, for example, if pollution of Salmonella occurs, it is very difficult to find out which batches of the foods are initial polluted ones. In the past, all batches of the foods are recalled. However, in this process, many foods are wasted.

### SUMMARY OF THE INVENTION

Due to the problem resulting from the prior arts, the present invention provides a more rigorous product history which contains vertical and horizontal production and sale systems, in that a stage is as a resource of a next stage. A manufacturing and sale process includes the stages of manufacturing (such as farming), processing after harvesting, reworking, manufacturing, logistics, transportation, sale, and other processes. Each stage may be viewed as a resource of the following stage. The requirement of tracking and retrospective of the stages of the processes is established to be matched to the law. Therefore, the management of food hygiene can be done easily.

To achieve above object, the present invention provides a method for tracking product history, comprising the steps of: consolidate at least two consecutive production and marketing units namely a first production and marketing unit and a second production and marketing unit associated with a specific product; the first production and marketing unit assigns the specific product an application identifier (Al) in an initial stage of a manufacturing process, respectively provides reading apparatuses at the initial and final stages of the manufacturing process, reads the application identifier (Al) and uploads same to a database storage space; the second production and marketing unit provides a reading apparatus at the initial stage, reads the application identifier (Al) and uploads same to the database storage space; data uploaded to a first section by the first production and marketing unit and data uploaded to a second section by the second production and marketing unit are linked in series by means of a block chain to form a continuous transaction record and since each section contains an encrypted hash value, a corresponding timestamp and transaction data of the previous section, the content of the two sections are tamper-resistant.

In practice, the application identifier (Al) is published by the barcode publishing and management center. Other than the identifications of product items, also including batches of the products, manufacturing dates and others. It can present the historical data of the products and thus by using de-centralized block chain technology, the historical data about the product transaction records are more unified.

Application identifiers are widely used in Information Flow and Logistics Flow and gradually extend to Money Flow and Business Flow management. Identification systems in the past are commonly used in B2B (business to business) electronic application. Recently, due to the development of intellectual networks, barcodes are used in B2C (business to consumer) electronic application. Other than consumer goods, health care, transportation and logistics, the application identifiers also extend to many other industries.

The application identifier can be identified as GSI IS keys,
GTIN: identification of transaction item
SSCC: identification of logistics unit
GLN: identification of position
GRAI: identification of returnable assets
GIAI: identification of general assets

Furthermore, it also extends to documents, contracts, transportation of goods, supplementary identification data, etc. Furthermore the application identifier can also define: batch number, expiration date, unit of weights and measures, etc. including several hundred different kinds of data. People in the material supply chain, such as material suppliers, product manufacturers, retailers, warehousing, logistics, distribution, etc., can file for the use of application identifiers.

According to the recording of Wikipedia, by using encryption, the block chain is a serial transaction records for protecting contents. Each block includes hashing encryptions, respective time stamps, and transaction records of a former block. As a result, the contents of the blocks are very difficult to be modified. The distributed accounts generated by block chains have the property of effective recording and the transaction records can be checked permanently. The best advantage of the block chain is that it can be developed and provided by common platform. The enterprises (including competitors) of various industries must agree on a common standard and run a system so as to enjoy the maximum advantage of block chain. Besides, the application identifier for the historical data of products is widely used in current product logistics. Therefore, no other further barcode is used for the manufactures, while in the prior art, they need to set a specific barcode for matching the historical data of the products.

By uploading the current used application identifier, the historical data of a product can be checked. For the application identifier, one initiator can convene many people as a group. These people need obey a common barcode rule so that the manufacturers can upload the historical data of products.

In the present invention, by combining a common setting application identifier, and by using block chain technology, a historical data network of a specific product is developed in vertical and horizontal directions. The application identifier is further provided to a consumer group for searching of data so as to assure the checkable and non-modifiable of historical data in the processes of manufacturing, warehousing, dispatching, and other processes. With expansion of the network, the paths of reproduction and reworking of the products are able to be further tracked for assuring reliability of the quality of the products.

### BRIEF DESCRIPTION OF THE DRAWINGS

Fig. 1 is a flow diagram of the present invention.
Fig. 2 is a schematic view showing the system of the present invention.
Fig. 3 is another schematic view showing the system of the present invention.
Fig. 4 is a further schematic view showing the system of the present invention.
Fig. 5 is a yet schematic view showing the system of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

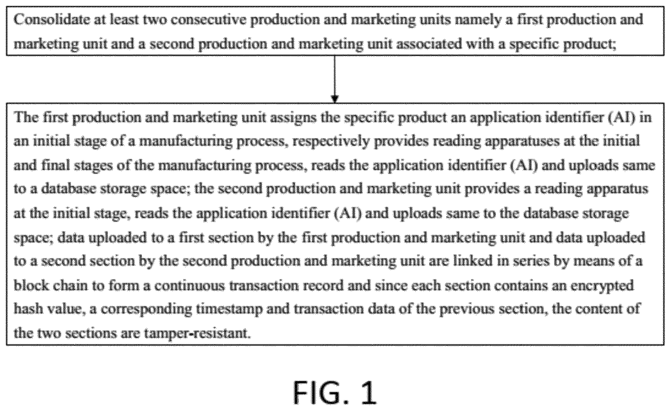

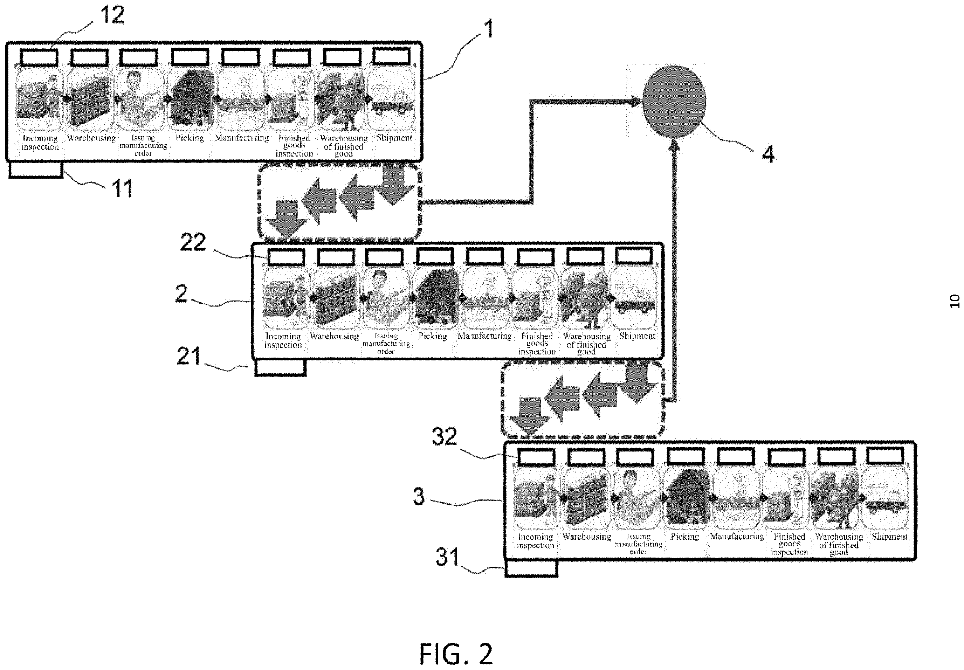

With reference to Figs. 1 and 2, a retrace method for historical data of products, comprising the following steps of:
1 Combining a plurality of continuous production and marketing units, such as a first production and marketing unit 1, a second production and marketing unit 2 and a third production and marketing unit 3, etc.
2. In an initial producing stage, the first production and marketing unit 1 for a specific product being loaded with an application identifier 11 (Al) in the initial stage of the producing process. Furthermore, at the initial producing stage and a final producing stage, the first production and marketing unit 1 is installed with respective reading device 12. The initial producing stage and the final producing stage may be different for different products. In the drawing, it is shown that the producing stage includes incoming inspection (initial stage), warehousing, issuing manufacturing order, picking, manufacturing, finished goods inspection, warehousing of finished goods, shipment (final stage). If it is necessary, each producing stage can be equipped with respective reading device 12. The reading device 12 reads the application identifier 11 and uploads the application identifier 11 to a data storage space 4.

The second production and marketing unit 2 is installed with a reading device 22 at an initial stage and reads an application identifier 21. The reading device 22 reads the application identifier 21 (Al) and uploads it to the data storage space 4. The uploading data of a first stage of the first production and marketing unit 1 and the uploading data of a second stage of a second production and marketing unit 2 are connected by a block chain so as to have continuous transaction records. Data of each stage includes the encryption hashing, respective time stamps and transaction data of former stages. Therefore, contents of the two stages are difficult to be amended. This processes are suitable for those of third production and marketing unit 3, the forth production and marketing unit, and other production and marketing units.

In the present invention, block chains and the application identifiers 11, 21, 31 are combined, and by serially connecting the information of the first production and marketing unit 1 and the second production and marketing unit 2 and by protecting contents of the transaction records (that is, data for all sections). Data of each section includes the encryption hashing, respective time stamps and transaction data of former stages. Therefore, contents of all the sections are avoided to be modified.

The best advantages of block chain are that: they can be developed and provided through common industrial platforms, however specific enterprises (including competitors) of different industries must agree on identical standards and jointly operate this platform for generating a common platform to cause the block chain has a maximum advantage. Besides, in the present invention, the uploading product historical data adapts application identifiers as uploading data. However, the application identifiers are widely used in current logistics. Therefore, no barcode matching to a specification is undesired for the request of the product history. By uploading the application identifiers, the product history can be searched. An initiator can joint plural persons as a group for using the application identifiers and a same barcode specification is adapted by this group. Thereby, the product history can be uploaded.

Therefore, the application identifier with specification which is commonly created is combined with block chain to develop specific product history in vertical and horizontal directions. These product histories are provided to be searched in networks by consumers for assuring that searching can be performed during processes of manufacturing, warehousing and distributions and sales without being modified. The data cannot be changed. With the expansion of network, paths about reproduction and reworking of the products can be tracked for assuring the reliability of the quality of the product.

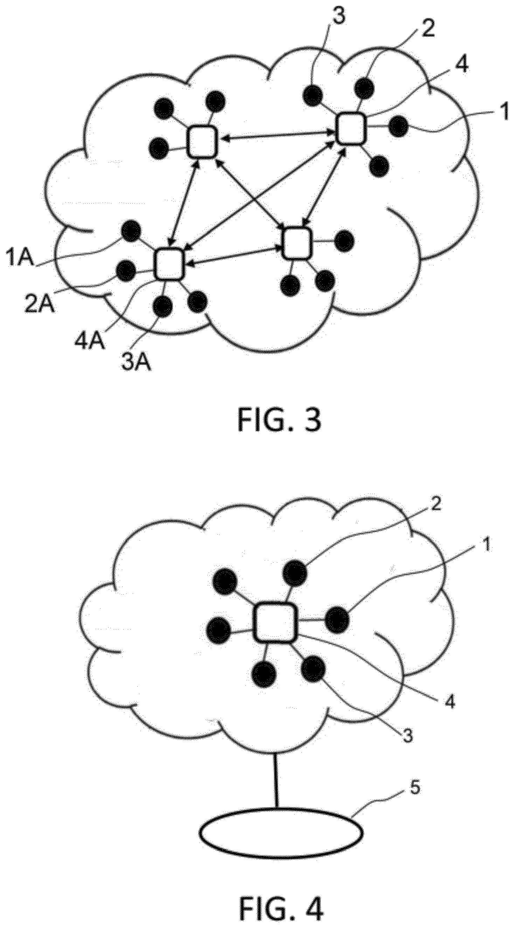

Referring to Fig. 3, other than the first production and marketing unit 1, the second production and marketing unit 2 and the third production and marketing unit 3, even more other production and marketing units which can be linked to the data storage space 4, these production and marketing units even can be linked to another data storage space 4A which are linked by another first production and marketing unit 1A, another second production and marketing unit 2A and another third production and marketing unit 3A so as to form a network of block chain.

In a preferred embodiment, the block chain can be formed as a public block chain platform by using the commonly used Ethereum so as to provide decentralized virtual machine for processing reciprocal contracts by using cryptocurrency ether.

With reference to Figs. 2 and 4, the preferred embodiment of the present invention is illustrated. The data storage space 4 is connected to a web server 5, while external consumers or inspection authority can scan the application identifiers 11, 12 and 31 to link to the network for checking and inspecting.

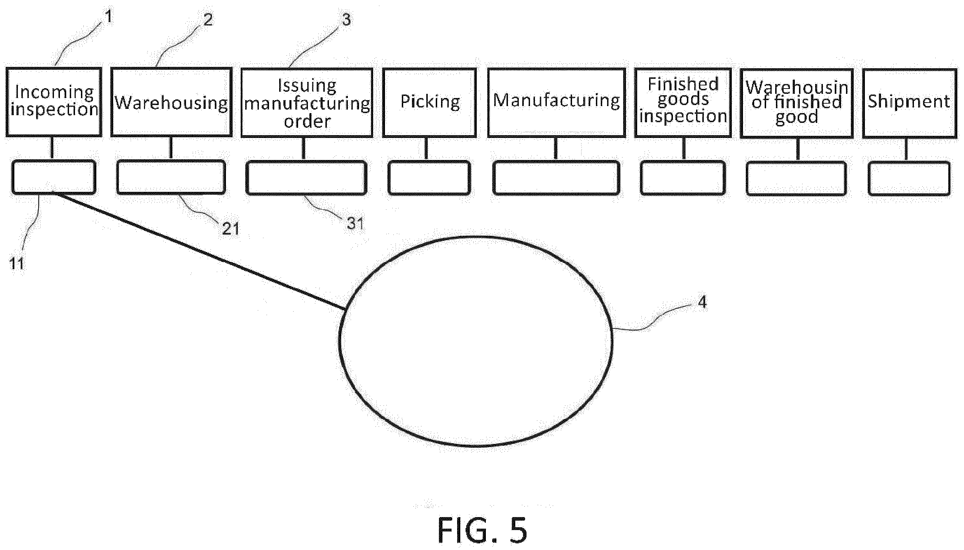

With reference to Fig. 5, in the present invention the first production and marketing unit 1, the second production and marketing unit 2 and the third production and marketing unit 3 may be a single producing unit in each stage. As a result, the uploaded data in incoming inspection and warehousing are linked in series by means of a block chain to form a continuous transaction record and since each section contains an encrypted hash value, a corresponding timestamp and transaction data of the previous section, the content of the two sections are tamper-resistant.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for tracking product history, comprising the steps of:
(1) consolidating at least two consecutive production and marketing units namely a first production and marketing unit and a second production and marketing unit associated with a specific product;
(2) the first production and marketing unit assigns the specific product an application identifier (Al) in an initial stage of a manufacturing process, respectively provides reading apparatuses at the initial and final stages of the manufacturing process, reads the application identifier (AI) and uploads same to a database storage space; the second production and marketing unit provides a reading apparatus at the initial stage, reads the application identifier (AI) and uploads same to the database storage space; data uploaded to a first section by the first production and marketing unit and data uploaded to a second section by the second production and marketing unit are linked in series by means of a block chain to form a continuous transaction record and since each section contains an encrypted hash value, a corresponding timestamp and transaction data of the previous section, the content of the two sections are tamper-resistant.

2. The method for tracking product history as claimed in claim 1, wherein the block chain is formed as a public block chain platform by using Ethereum, so as to provide a decentralized virtual machine for processing equal contracts by using cryptocurrency ether.

3. The method for tracking product history as claimed in claim 1, wherein the data storage space is connected to a web server and for the external to scan the application identifier to link to the network for checking and inspecting .
